(19) Europäisches Patentamt
European Patent Office
Office européen des brevets

(11) **EP 2 264 294 B1**

(12) **EUROPÄISCHE PATENTSCHRIFT**

(45) Veröffentlichungstag und Bekanntmachung des Hinweises auf die Patenterteilung:
**01.02.2012 Patentblatt 2012/05**

(51) Int Cl.:
*F02B 29/04* *(2006.01)*      *F01P 7/02* *(2006.01)*

(21) Anmeldenummer: **10162559.8**

(22) Anmeldetag: **11.05.2010**

(54) **Vorrichtung zur Steuerung der Temperatur eines durch einen Ladeluftkühler hindurchtretenden Ladeluftstroms**

Device for controlling the temperature of a charged air flow passing through an intercooler

Dispositif de commande de la température d'un flux d'air de chargement passant à travers un dispositif de refroidissement d'air de chargement

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.05.2009 DE 102009026613**

(43) Veröffentlichungstag der Anmeldung:
**22.12.2010 Patentblatt 2010/51**

(73) Patentinhaber: **DEERE & COMPANY**
**Moline, Illinois 61265-8098 (US)**

(72) Erfinder:
• **Stark, Waldemar**
**67227 Frankenthal (DE)**
• **Back, Peter**
**68789 St. Leon-Rot (DE)**

(74) Vertreter: **Dehnhardt, Florian Christopher**
**Deere & Company**
**European Office**
**Global Intellectual Property Services**
**John-Deere-Straße 70**
**68163 Mannheim (DE)**

(56) Entgegenhaltungen:
EP-A1- 0 496 085      EP-A2- 0 097 230
WO-A1-98/25012      FR-A1- 2 895 452
GB-A- 2 374 124      JP-A- 60 206 934

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Steuerung der Temperatur eines durch einen luftgekühlten Ladeluftkühler hindurchtretenden Ladeluftstroms für einen aufgeladenen Verbrennungsmotor, mit einer Lüftereinrichtung zur Erzeugung eines den Ladeluftkühler beaufschlagenden Kühlluftstroms, und mit einer Stelleinrichtung zur Beeinflussung der Kühlluftmenge nach Maßgabe einer zugeführten Steuergröße gemäß Anspruch 1.

Derartige Ladeluftkühler werden bei aufgeladenen Verbrennungsmotoren, insbesondere bei Dieselmotoren eingesetzt, um die mittels eines Abgasturboladers verdichtete und dabei erhitzte Ladeluft zur Erhöhung des Liefergrades und damit der Leistungsabgabe des Verbrennungsmotors abzukühlen.

Die Offenlegungsschrift DE 10 2207 005 393 A1 offenbart in diesem Zusammenhang eine Vorrichtung zur Regelung der Ladelufttemperatur bei einem luftgekühlten Ladeluftkühler für eine Brennkraftmaschine in einem Kraftfahrzeug. Der Ladeluftkühler weist einen Eintritts- und Austrittsbereich auf, wobei jedem der beiden Bereiche ein Temperatursensor zur Erfassung einer zugehörigen Ladelufttemperatur zugeordnet ist. Des Weiteren ist ein bezüglich seiner Drehzahl regelbarer Lüfter zur Erzeugung eines den Ladeluftkühler beaufschlagenden Kühlluftstroms vorhanden. Eine Regelungseinrichtung passt die Drehzahl des Lüfters nach Maßgabe der von den Temperatursensoren erfassten Ladelufttemperaturen derart an, dass eine Kühlung der Ladeluft entsprechend einer am Austrittsbereich einzuhaltenden Ladelufttemperatur erfolgt. Da dies die Verwendung einer komplexen Closed-Loop-Regelung voraussetzt, ist die bekannte Vorrichtung vergleichsweise aufwendig aufgebaut.

Dokument EP 0 097 230 A2 zeigt einen Lüfterantrieb für eine Kühlanlage, wobei der verwendete Hydromotor temperaturgesteuert ist.

Es ist daher Aufgabe der vorliegenden Erfindung, eine bezüglich ihres Aufbaus vereinfachte Vorrichtung der eingangs genannten Art anzugeben.

Diese Aufgabe wird durch eine Vorrichtung mit den Merkmalen des Patentanspruchs 1 gelöst.

Die Vorrichtung zur Steuerung der Temperatur eines durch einen luftgekühlten Ladeluftkühler hindurchtretenden Ladeluftstroms für einen aufgeladenen Verbrennungsmotor umfasst neben einer Lüftereinrichtung zur Erzeugung eines den Ladeluftkühler beaufschlagenden Kühlluftstroms des Weiteren eine Stelleinrichtung zur Beeinflussung der Kühlluftmenge nach Maßgabe einer zugeführten Steuergröße. Erfindungsgemäß gibt die Steuergröße einen am Ladeluftkühler anliegenden Ladedruck wieder.

Der erfindungsgemäßen Vorrichtung liegt die Erkenntnis zugrunde, dass der von einem Abgasturbolader erzeugte Ladedruck bei einem aufgeladenen Verbrennungsmotor nahezu unabhängig von der Drehzahl des Verbrennungsmotors mit dessen Leistungsabgabe zunimmt. Wird daher der Ladedruck als Steuergröße zur Vorgabe der den Ladeluftkühler beaufschlagenden Kühlluftmenge herangezogen, hängt letztere ihrerseits im Wesentlichen ausschließlich von der Leistungsabgabe des Verbrennungsmotors ab. Da die zur Einhaltung einer bestimmten Temperatur der Ladeluft erforderliche Kühlluftmenge in der Regel eine geringfügige Abnahme mit der Drehzahl des Verbrennungsmotors zeigt, ist es zur Sicherstellung einer gleichbleibenden Kühlung der Ladeluft von Vorteil, wenn sich die Kühlluftmenge an der Nenndrehzahl, d.h. an der für den Dauerbetrieb zulässigen Höchstdrehzahl des Verbrennungsmotors orientiert.

Die erfindungsgemäße Vorrichtung ist aufgrund der nach Maßgabe des Ladedrucks vorgenommenen Open-Loop-Steuerung der Kühlluftmenge vergleichsweise einfach aufgebaut.

Vorteilhafte Ausführungen der Vorrichtung gehen aus den Unteransprüchen hervor.

Da sich Änderungen des Ladedrucks, wie sie aufgrund einer fahrtbedingt schwankenden Leistungsabgabe des Verbrennungsmotors verursacht werden, ausgehend vom Abgasturbolader zeitverzögert in Richtung des Ladeluftkühlers ausbreiten, kann zur Verringerung der thermischen Belastung des Ladeluftkühlers eine Vorsteuerung der Stelleinrichtung erfolgen. Hierzu wird der Ladedruck vorzugsweise im Bereich zwischen einem Auslass des Abgasturboladers und einem Einlass des Ladeluftkühlers abgegriffen.

Die Lüftereinrichtung weist zur Erzeugung des Kühlluftstroms einen mittels eines Antriebsaggregats in Drehung versetzbaren Lüfterrotor auf. Der Lüfterrotor umfasst eine Vielzahl radial ausgerichteter Förderflügel, die gleichmäßig am Umfang einer in einem Lüftergehäuse drehbar gelagerten Antriebsachse angebracht sind. An dem Lüftergehäuse ist ein mit der Außenatmosphäre kommunizierender Kühllufteinlass sowie ein dem Ladeluftkühler zugewandter Kühlluftauslass ausgebildet. Ein dem Ladeluftkühler vorgeschaltetes Filterelement verhindert ein Eindringen unerwünschter Schmutzpartikel, die mit dem Kühlluftstrom aus der Außenatmosphäre angesaugt werden und zu einer Beeinträchtigung der Kühlleistung des Ladeluftkühlers führen können. Das Lüftergehäuse kann gemeinsam mit dem Ladeluftkühler eine in einem Motorraum eines Kraftfahrzeugs untergebrachte Kühlerbaugruppe bilden, wobei der Ladeluftkühler über hitzbeständige Gummiluftleitungen mit dem Abgasturbolader bzw. dem Verbrennungsmotor des Kraftfahrzeugs in Verbindung steht.

Bei dem Antriebsaggregat handelt es sich um einen Hydromotor, der sich durch Zuführung eines unter Druck stehenden Hydraulikflüssigkeitsstroms antreiben lässt, wobei die zugeführte Hydraulikflüssigkeitsmenge mittels der Stelleinrichtung veränderbar ist. Der Hydromotor selbst kann von herkömmlicher Bauart sein und einen in einem Motorgehäuse unter Einfluss des Hydraulikflüssigkeitsstroms rotierenden Verdrängerkolben aufweisen, der mit einer aus dem Motorgehäuse herausgeführten Antriebsachse drehfest verbunden ist. Die Erzeugung des Hydraulikflüssigkeitsstroms erfolgt beispielsweise mittels einer aus einem Hydraulikflüssigkeitsspeicher gespeisten Hydraulikpumpe, die mittels des Verbrennungsmotors angetrieben wird. Durch Veränderung der dem Hydromotor zugeführten Hydraulikflüssigkeitsmenge oder eines von der Hydraulikpumpe bzw. dem Hydromotor umfassten verstellbaren Verdrängervolumens kann die Drehzahl des Lüfterrotors und damit die zur Beaufschlagung des Ladeluftkühlers erzeugte Kühlluftmenge gezielt gesteuert werden.

Zur Veränderung der dem Hydromotor zugeführten Hydraulikflüssigkeitsmenge weist die Stelleinrichtung ein ladedruckgesteuertes Proportionalventil auf.

Das Proportionalventil ist im Hydraulikflüssigkeitsstrom als Umgehungsventil parallel zum Hydromotor angeordnet. Das Umgehungsventil umfasst einen Ventilschieber, der nach Maßgabe des an einem Steuereingang des Umgehungsventils anliegenden Ladedrucks entgegen einer rückstellenden Federkraft derart in eine durchlässige Ventilstellung verbringbar ist, dass der Anteil der an dem Hydromotor vorbeigeleiteten Hydraulikflüssigkeitsmenge mit zunehmendem Ladedruck verringert wird.

Die erfindungsgemäße Vorrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1    ein schematisch dargestelltes erstes Ausführungsbei- spiel der erfindungsgemäßen Vorrichtung,

Fig. 2    ein Diagramm, das beispielhaft das Verhalten des Lade- drucks in Abhängigkeit der Drehzahl und Leistungsabga- be des Verbrennungsmotors veranschaulicht,

Fig. 3    ein Diagramm, das beispielhaft die zur Einhaltung ei- ner bestimmten Temperatur der Ladeluft erforderliche Kühlluftmenge veranschaulicht,

Fig. 4    ein schematisch dargestelltes Beispiel einer nicht erfindungsgemäßen Vorrichtung, und

Fig. 5    ein schematisch dargestelltes weiteres Beispiel einer nicht erfindungsgemäßen Vorrichtung.

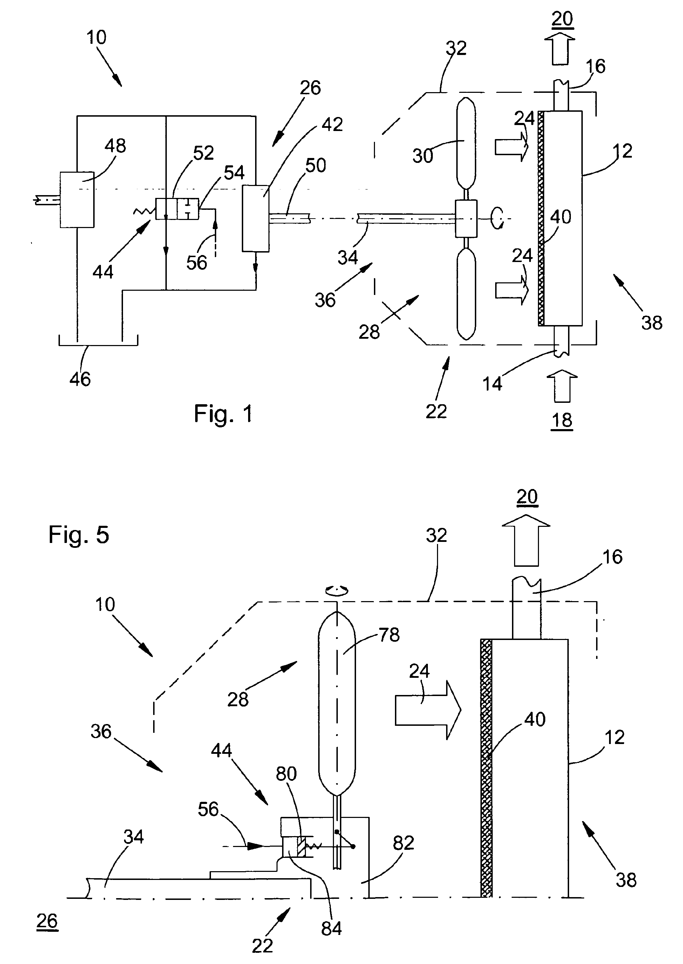

Fig. 1 zeigt ein erstes Ausführungsbeispiel der erfindungsgemäßen Vorrichtung zur Steuerung der Temperatur eines durch einen Ladeluftkühler hindurchtretenden Ladeluftstroms.

Die Vorrichtung 10 umfasst einen luftgekühlten Ladeluftkühler 12, der über hitzebeständige Gummiluftleitungen 14, 16 einlassseitig mit einem Abgasturbolader 18 und auslassseitig mit einem aufgeladenen Verbrennungsmotor 20 eines nicht dargestellten Kraftfahrzeugs in Verbindung steht. Der aufgeladene Verbrennungsmotor 20 ist beispielsweise als Dieselmotor ausgebildet.

Bei dem Kraftfahrzeug handelt es sich insbesondere um ein landwirtschaftliches Nutzfahrzeug, beispielsweise um einen Traktor, eine Erntemaschine, einen Feldhäcksler oder eine selbstfahrende Spritzmaschine.

Eine Lüftereinrichtung 22 dient der Erzeugung eines den Ladeluftkühler 12 beaufschlagenden Kühlluftstroms 24. Die Lüftereinrichtung 22 weist zur Erzeugung des Kühlluftstroms 24 einen mittels eines Antriebsaggregats 26 in Drehung versetzbaren Lüfterrotor 28 auf. Der Lüfterrotor 28 umfasst eine Vielzahl radial ausgerichteter Förderflügel 30, die gleichmäßig am Umfang einer in einem Lüftergehäuse 32 drehbar gelagerten Antriebsachse 34 angebracht sind. An dem Lüftergehäuse 32 ist ein mit der Außenatmosphäre kommunizierender Kühllufteinlass 36 sowie ein dem Ladeluftkühler 12 zugewandter Kühlluftauslass 38 ausgebildet. Ein dem Ladeluftkühler 12 vorgeschaltetes Filterelement 40 verhindert ein Eindringen unerwünschter Schmutzpartikel, die mit dem Kühlluftstrom 24 angesaugt werden und zu einer Beeinträchtigung der Kühlleistung des Ladeluftkühlers 12 führen können. Das Lüftergehäuse 32 bildet gemeinsam mit dem Ladeluftkühler 12 eine in einem Motorraum des Kraftfahrzeugs untergebrachte Kühlerbaugruppe.

Bei dem Antriebsaggregat 26 handelt es sich um einen Hydromotor 42, der sich durch Zuführung eines unter Druck stehenden Hydraulikflüssigkeitsstroms antreiben lässt. Die zugeführte Hydraulikflüssigkeitsmenge ist mittels einer Stelleinrichtung 44 nach Maßgabe eines am Ladeluftkühler 12 vorliegenden Ladedrucks veränderbar. Die Erzeugung des Hydraulikflüssigkeitsstroms erfolgt mittels einer aus einem Hydraulikflüssigkeitsspeicher 46 gespeisten Hydraulikflüssigkeitspumpe 48, die mittels des Verbrennungsmotors 20 angetrieben wird.

Der Hydromotor 42 selbst ist von herkömmlicher Bauart und weist einen in einem Motorgehäuse unter Einfluss des Hydraulikflüssigkeitsstroms rotierenden Verdrängerkolben auf, der mit einer aus dem Motorgehäuse herausgeführten Antriebsachse 50 drehfest verbunden ist. Durch Veränderung der dem Hydromotor 42 zugeführten Hydraulikflüssigkeitsmenge kann die Drehzahl des Lüfterrotors 28 und damit die zur Beaufschlagung des Ladeluftkühlers 12 erzeugte Kühlluftmenge gezielt gesteuert werden.

Zur Steuerung der dem Hydromotor 42 zugeführten Hydraulikflüssigkeitsmenge weist die Stelleinrichtung 44 ein ladedruckgesteuertes Proportionalventil 52 auf. Das Proportionalventil 52 ist in Gestalt eines Umgehungsventils parallel zum Hydromotor 42 angeordnet. Das Umgehungsventil umfasst einen Ventilschieber, der nach Maßgabe des an einem Steuereingang 54 des Umgehungsventils anliegenden Ladedrucks entgegen einer rückstellenden Federkraft derart in eine durchlässige Ventilstellung verbringbar ist, dass der Anteil der an dem Hydromotor 42 vorbeigeleiteten Hydraulikflüssigkeitsmenge mit zunehmendem Ladedruck verringert wird. Hierzu wird der Ladedruck im Bereich des Einlasses des Ladeluftkühlers 12 abgegriffen und dem Umgehungsventil als Steuergröße über eine Druckleitung 56 zugeführt.

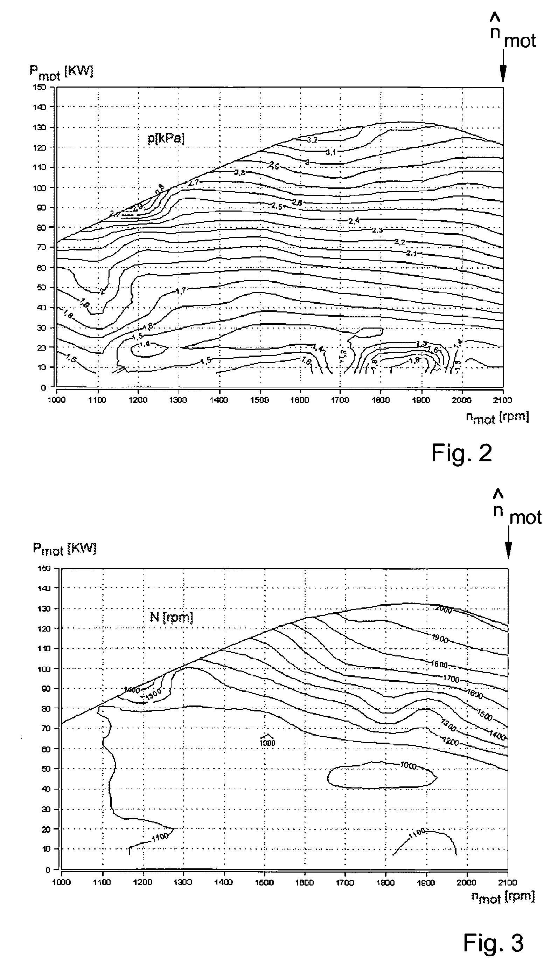

Fig. 2 zeigt ein Diagramm, das beispielhaft das Verhalten des Ladedrucks p im Bereich des Einlasses des Ladeluftkühlers 12 in Abhängigkeit der Drehzahl $n_{mot}$ und Leistungsabgabe $P_{mot}$ des Verbrennungsmotors 20 veranschaulicht. Demgemäß nimmt der Ladedruck p nahezu unabhängig von der Drehzahl $n_{mot}$ des Verbrennungsmotors 20 mit dessen Leistungsabgabe $P_{mot}$ zu. Wird daher der Ladedruck p als Steuergröße zur Vorgabe der den Ladeluftkühler 12 beaufschlagenden Kühlluftmenge M herangezogen, hängt letztere ihrerseits im Wesentlichen ausschließlich von der Leistungsabgabe $P_{mot}$ des Verbrennungsmotors 20 ab.

Fig. 3 zeigt ein Diagramm, das beispielhaft die zur Einhaltung einer bestimmten Temperatur der Ladeluft erforderliche Kühlluftmenge M - wiedergegeben durch eine zugehörige Drehzahl N des Lüfterrotors 28 - in Abhängigkeit der Drehzahl $n_{mot}$ und Leistungsabgabe $P_{mot}$ des Verbrennungsmotors 20 veranschaulicht. Demgemäß zeigt die Kühlluftmenge M eine geringfügige Abnahme mit der Drehzahl $n_{mot}$ des Verbrennungsmotors 20. Es ist daher von Vorteil, wenn sich die Kühlluftmenge M zur Sicherstellung einer gleichbleibenden Kühlung der Ladeluft an der Nenndrehzahl, d.h. an der für den Dauerbetrieb zulässigen Höchstdrehzahl $\hat{n}_{mot}$ des Verbrennungsmotors 20 orientiert,

$$ M \approx \kappa \cdot p(P_{mot}, \hat{n}_{mot}) \ , $$

wobei $\kappa$ ein unter anderem vom Wirkungsgrad des Ladeluftkühlers 12 bzw. der Lüftereinrichtung 22 abhängiger Koeffizient ist. Auf diese Weise ist stets eine ausreichende Kühlung der Ladeluft sichergestellt.

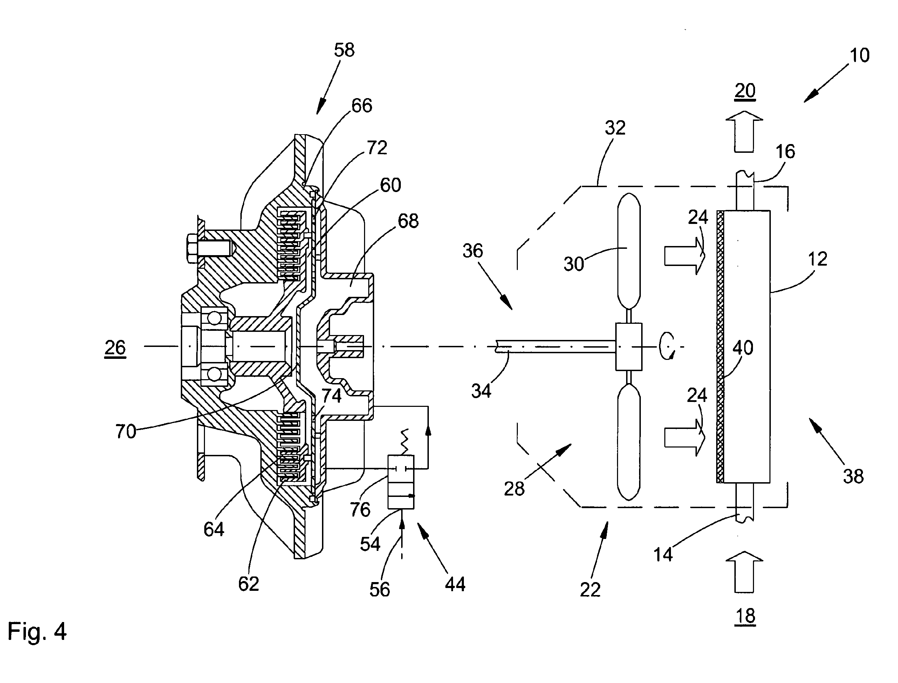

Fig. 4 zeigt eine nicht erfindungsgemäßen Vorrichtung. Diese unterscheidet sich von dem in Fig. 1 dargestellten ersten Ausführungsbeispiel bezüglich der Art und Weise der Steuerung der Drehzahl des Lüfterrotors 28.

Demgemäß steht das Antriebsaggregat 26 mit dem Lüfterrotor 28 über eine Kupplung 58 in Verbindung, deren Kupplungsschluss mittels der Stelleinrichtung 44 veränderbar ist. Durch Veränderung des Kupplungsschlusses kann die Drehzahl des Lüfterrotors 28 und damit die zur Beaufschlagung des Ladeluftkühlers 12 erzeugte Kühlluftmenge unabhängig vom Antriebsaggregat 26 gesteuert werden.

Im vorliegenden Fall wird als Antriebsaggregat 26 der Verbrennungsmotor 20 genutzt, wobei dieser über einen Riementrieb oder eine flexible Welle mit der Kupplung 58 in Verbindung steht.

Beispielsgemäß handelt es sich bei der Kupplung 58 um eine als Bestandteil der Lüftereinrichtung 22 ausgebildete Visco-Lüfterkupplung. Diese umfasst einen in einem Arbeitsraum 60 angeordneten antriebsseitigen Rotor 62, der mit den Wänden des Arbeitsraums 60 mehrere Scherspalte 64 zur Herstellung eines Kupplungsschlusses mit einem abtriebsseitigen Gehäuse 66 bildet. Der Arbeitsraum 60 ist gegenüber einem Vorratsraum 68 für Hydraulikflüssigkeit durch eine Trennwand 70 abgeteilt, wobei die Trennwand 70 mehrere umfangsmäßig angeordnete Pumpöffnungen 72 aufweist, mittels derer im Falle einer Relativdrehung des Rotors 62 gegenüber dem Gehäuse 66 ein in Richtung des Arbeitsraums 60 übertretender Hydraulikflüssigkeitsstrom erzeugbar ist. Des weiteren sind in der Trennwand 70 mehrere Steueröffnungen 74 angeordnet, die einen Rückstrom von Hydraulikflüssigkeit in den Vorratsraum 68 erlauben. Durch Veränderung der zurückströmenden Hydraulikflüssigkeitsmenge mittels eines von der Stelleinrichtung 44 umfassten ladedruckgesteuerten Proportionalventils 76 kann der Kupplungsschluss gezielt verändert werden.

Fig. 5 zeigt eine schematisch dargestellte weitere nicht erfindungsgemäße Vorrichtung. Dieses unterscheidet sich von dem in Fig. 2 dargestellten Beispiel bezüglich der Art und Weise der Steuerung der den Ladeluftkühler 12 beaufschlagenden Kühlluftmenge.

Demgemäß weist der Lüfterrotor 28 eine Vielzahl von bezüglich ihres Förderquerschnitts verstellbaren Rotorflügeln 78 auf, wobei die Verstellung der Rotorflügel 78 mittels eines von der Stelleinrichtung 44 umfassten ladedruckgesteuerten Betätigungselements 80 erfolgt. Das Betätigungselement 80 ist nach Maßgabe des Ladedrucks entgegen einer rückstellenden Federkraft derart auslenkbar, dass die Rotorflügel 78 mit zunehmendem Ladedruck im Sinne einer Vergrößerung des Förderquerschnitts bzw. des Anstellwinkels verschwenkt werden. Hierbei kann jedem der verstellbaren Rotorflügel 78 ein separates Betätigungselement 80 zugeordnet sein, wobei die Betätigungselemente 80 über einen im Umfang einer Lüfternabe 82 verlaufenden Ringkanal 84 mittels des Ladedrucks beaufschlagbar sind.

Auch hier wird als Antriebsaggregat 26 der Verbrennungsmotor 20 genutzt, wobei dieser über einen Riementrieb oder eine flexible Welle mit der Antriebsachse 34 in Verbindung steht.

**Patentansprüche**

1. Vorrichtung zur Steuerung der Temperatur eines durch einen luftgekühlten Ladeluftkühler (12) hindurchtretenden Ladeluftstroms für einen aufgeladenen Verbrennungsmotor (20), mit einer Lüftereinrichtung (22) zur Erzeugung eines den Ladeluftkühler (12) beaufschlagenden Kühlluftstroms (24), wobei die Lüftereinrichtung (22) zur Erzeugung des Kühlluftstroms (24) einen mittels eines Antriebsaggregats (26) in Drehung versetzbaren Lüfterrotor (28) aufweist, und mit einer Stelleinrichtung (44) zur Beeinflussung der Kühlluftmenge nach Maßgabe einer zugeführten Steuergröße, wobei die Steuergröße einen am Ladeluftkühler (12) vorliegenden Ladedruck wiedergibt, **dadurch gekennzeichnet, dass** es sich bei dem Antriebsaggregat (26) um einen Hydromotor (42) handelt, der sich durch Zuführung eines unter Druck stehenden Hydraulikflüssigkeitsstroms antreiben lässt, wobei die zugeführte Hydraulikflüssigkeitsmenge mittels eines von der Stelleinrichtung (44) umfassten druckgesteuerten Proportionalventils (52) veränderbar ist, das im Hydraulikflüssigkeitsstrom in Gestalt eines Umgehungsventils parallel zum Hydromotor angeordnet ist und einen Ventilschieber umfasst, der nach Maßgabe des an einem Steuereingang (54) des Umgehungsventils anliegenden Ladedrucks entgegen einer rückstellenden Federkraft derart in eine durchlässige Ventilstellung verbringbar ist, dass der Anteil der an dem Hydromotor (42) vorbeigeleiteten Hydraulikflüssigkeitsmenge mit zunehmendem Ladedruck verringert wird.

**2.** Vorrichtung nach Anspruch 1, **dadurch gekennzeichnet, dass** der Ladedruck im Bereich zwischen einem Auslass eines Abgasturboladers (18) und einem Einlass des Ladeluftkühlers (12) abgegriffen wird.

**3.** Kraftfahrzeug, insbesondere landwirtschaftliches Nutzfahrzeug, mit einer Vorrichtung (10) zur Steuerung der Temperatur eines durch einen Ladeluftkühler (12) hindurchtretenden Ladeluftstroms für einen Verbrennungsmotor (20) nach Anspruch 1.

## Claims

**1.** Device for controlling the temperature of a charge air flow passing through an air-cooled intercooler (12), for a supercharged internal combustion engine (20), having a fan device (22) for generating a cooling air stream (24) which acts on the intercooler (12), wherein the fan device (22) has, for the purpose of generating the cooling air stream (24), a fan rotor (28) which can be made to rotate by means of a drive unit (26), and having an actuating device (44) for influencing the cooling air quantity in accordance with a fed-in control variable, wherein the control variable represents a charge pressure which is present at the intercooler (12), **characterized in that** the drive unit (26) is a hydraulic motor (42) which can be driven by feeding in a stream of pressurized hydraulic fluid, wherein the fed-in quantity of hydraulic fluid can be changed by means of a pressure-controlled proportional valve (50) which is included in the actuating device (44) and is arranged in the form of a bypass valve parallel to the hydraulic motor in the stream of hydraulic fluid, and comprises a valve slide which can be moved into an open valve position counter to a resetting spring force in accordance with the charge pressure present at a control inlet (54) of the bypass valve in such a way that the proportion of the quantity of hydraulic fluid which is conducted past the hydraulic motor (42) is reduced as the charge pressure increases.

**2.** Device according to Claim 1, **characterized in that** the charge pressure is tapped in the region between an outlet of an exhaust gas turbocharger (18) and an inlet of the intercooler (12).

**3.** Motor vehicle, in particular agricultural utility vehicle, having a device (10) for controlling the temperature of a charge air stream which passes through an intercooler (12), for an internal combustion engine (20) according to Claim 1.

## Revendications

**1.** Dispositif de commande de la température d'un flux d'air de chargement passant à travers un dispositif de refroidissement d'air de chargement (12) à air refroidi conçu pour un moteur à combustion interne (20) chargé, avec un dispositif de ventilation (22) pour la production d'un flux d'air de refroidissement (24) alimentant le dispositif de refroidissement d'air de chargement (12), le dispositif de ventilation (22) comportant, pour produire le flux d'air de refroidissement (24), un rotor de ventilateur (28) pouvant être mis en rotation à l'aide d'un groupe d'entraînement (26) et avec un dispositif régulateur (44) conçu pour influencer la quantité d'air de refroidissement en fonction de la quantité commandée amenée, la quantité commandée traduisant une pression de chargement régnant au niveau du dispositif de refroidissement d'air de chargement (12), **caractérisé en ce que** le groupe d'entraînement (26) est un moteur hydraulique (42) entraîné par introduction d'un flux de liquide hydraulique sous pression, la quantité de liquide hydraulique amenée pouvant varier à l'aide d'une soupape proportionnelle (52) commandée par pression comprenant le dispositif régulateur (44), ladite soupape prenant la forme d'une soupape de contournement et étant disposée parallèlement au moteur hydraulique, dans le flux de liquide hydraulique, et comprenant un piston de soupape pouvant être placé, en fonction de la pression de chargement régnant au niveau d'une entrée de commande (54) de la soupape de contournement, dans une position de soupape traversante, à l'encontre d'une force de ressort de rappel, de telle sorte que la partie de la quantité de liquide hydraulique amenée au moteur hydraulique (42) est réduite à mesure que la pression de chargement augmente.

**2.** Dispositif selon la revendication 1, **caractérisé en ce que** la pression de chargement régnant dans la zone située entre une sortie d'un turbocompresseur de gaz d'échappement (18) et une admission du dispositif de refroidissement d'air de chargement (12) est prélevée.

**3.** Véhicule automobile, notamment véhicule utilitaire agricole, avec un dispositif (10) pour commander la température d'un flux d'air de chargement traversant un dispositif de refroidissement d'air de chargement (12) pour un moteur à combustion interne (20) selon la revendication 1.

Fig. 1

Fig. 5

Fig. 2

Fig. 3

Fig. 4

EP 2 264 294 B1

EP 2 264 294 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102207005393 A1

- EP 0097230 A